# FASCICULE DE BREVET EUROPEEN

(11) **EP 3 399 164 B1**
(45) Date de publication et mention de la délivrance du brevet: **18.09.2019**
(21) Numéro de dépôt: 18168391.3
(22) Date de dépôt: 20.04.2018
(51) Int. Cl.: F01M 11/12, F16N 19/00, G01F 23/24, G01F 23/26

(54) **RÉSERVOIR À SONDE DE NIVEAU D' HUILE POUR TURBOMACHINE**
TANK MIT ÖLSTANDSONDE FÜR TURBOMASCHINE
TANK WITH OIL-LEVEL PROBE FOR A TURBINE ENGINE

(30) Priorité: 03.05.2017 BE 201705310
(43) Date de publication de la demande: 07.11.2018
(73) Titulaire: Safran Aero Boosters SA, 4041 Herstal (BE)
(72) Inventeur: CLEYET, Florian, 4020 Liège (BE); BOUGELET, Stéphane, 5170 Profondeville (BE); BEAUJEAN, Alain, 4360 Oreye (BE)
(74) Mandataire: Lecomte & Partners

(56) Documents cités:
- EP-A1- 0 143 167
- EP-A1- 2 720 006
- FR-A1- 3 035 919
- FR-A1- 3 036 792
- JP-A- S59 126 214
- US-A1- 2015 075 132

## Description

### Domaine technique

L'invention concerne la mesure du niveau de liquide dans un réservoir de turbomachine. L'invention a également trait à une turbomachine axiale, notamment un turboréacteur d'avion ou un turbopropulseur d'aéronef. L'invention traite également du montage d'une sonde de niveau de liquide dans un réservoir.

### Technique antérieure

La mesure précise du niveau d'huile dans un turboréacteur en vol apporte de la sécurité. En effectuant cette mesure dans le réservoir, l'autonomie en lubrifiant peut être estimée, et une situation de manque de ce fluide peut être anticipée.

Le document CN 10 262 71 50 A divulgue un réservoir d'huile de moteur d'avion. Le réservoir présente un corps rectangulaire dans lequel est placé un capteur de niveau électrique. Ce capteur de niveau de liquide est placé axialement selon l'allongement principal du corps du réservoir. Un système de contrôle automatique est branché au capteur de niveau afin d'estimer précisément la consommation d'huile.

Par ailleurs, un turboréacteur impose d'optimiser la compacité de chacun de ses organes. Augmenter la capacité ; et donc la hauteur du réservoir ; conduit à lui donner une forme courbe.

Le document US 2010/0326048 A1 divulgue une structure de réservoir d'huile placée à l'intérieur du conduit de bypass d'un turboréacteur. Ce réservoir étroit présente une courbure générale qui épouse une paroi interne de la turbomachine. Une telle structure offre une compacité optimale tout en offrant un volume interne conséquent. Or, la précision de mesure du niveau de fluide dans cette forme reste limitée.

Le document US 2015/0075132 A1 divulgue un ensemble selon le préambule de la revendication 1.

### Résumé de l'invention

### Problème technique

L'invention a pour objectif de résoudre au moins un des problèmes posés par l'art antérieur. Plus précisément, l'invention a pour objectif d'optimiser la précision de mesure et la simplification d'intégration d'une sonde de mesure d'huile dans un réservoir courbe. L'invention a également pour objectif de proposer une solution légère, économique, fiable, facile à produire, commode d'entretien, et d'inspection aisée.

### Solution technique

L'invention a pour objet un ensemble pour réservoir d'huile de turbomachine, notamment de turboréacteur d'aéronef, l'ensemble incluant un réservoir d'huile avec une paroi externe formant une enceinte principale généralement courbe, remarquable en ce que l'enceinte principale renferme une sonde arquée de mesure électrique du niveau d'huile, ladite sonde arquée épousant la courbure de l'enceinte principale, et des supports de sonde internes disposés le long de la sonde arquée, et/ou un fourreau arqué avec une cavité arquée dans laquelle est disposée la sonde arquée.

Selon des modes avantageux de l'invention, l'ensemble peut comprendre une ou plusieurs des caractéristiques suivantes, prises isolément ou selon toutes les combinaisons techniques possibles :
- Les supports de sonde s'étendent depuis la paroi externe vers l'intérieur de l'enceinte principale.
- Les supports de sonde comprenant des surfaces de maintien agencées le long de la sonde arquée.
- L'enceinte principale présente un allongement principal et une courbure principale le long dudit allongement principal.
- Au moins un ou plusieurs ou chaque support comprend un bras s'étendant de la sonde arquée à la paroi externe, éventuellement perpendiculairement.
- Les supports de sonde comprennent des guides entourant la sonde arquée, les guides comprenant éventuellement des surfaces de centrage.
- Les supports de sonde sont répartis le long de la sonde arquée et/ou le long de la courbure de l'enceinte principale.
- L'enceinte principale comprend deux premiers tronçons définissant un espace entre eux, et un tronçon intercalé entre les premiers tronçons, le tronçon intercalé étant majoritairement ou totalement en dehors dudit espace.
- Le fourreau est articulé, notamment à l'aide de liaisons pivot.
- Le fourreau comprend des découpes.
- Les découpes divisent le fourreau en plusieurs segments mobiles les uns par rapport aux autres.
- Le fourreau est relié à la paroi externe via les supports ou directement.
- La sonde comprend un conducteur électrique configuré pour être alimenté électriquement afin de mesurer le niveau d'huile, notamment en étant en contact électrique de l'huile.
- L'enceinte présente généralement une forme de cylindre cintré.
- Les supports sont répartis sur la majorité ou sensiblement toute la longueur de la sonde.
- Les supports de sonde et/ou le fourreau décrivent un arc épousant la courbure du réservoir.
- La sonde arquée est essentiellement rigide.
- La sonde arquée est déformée élastiquement dans l'enceinte.
- La sonde et les supports sont à l'intérieur de l'enceinte, et/ou sont entourés par la paroi.
- Le volume de l'enceinte principale est supérieur ou égal à : 30 litres, ou 45 litres, ou 70 litres.
- La hauteur de l'enceinte est supérieure ou égale à : 50cm, ou 60cm, ou 70cm.
- La courbure de l'enceinte ; notamment sa courbure principale ; et/ou la sonde décrivent un arc d'au moins : un dixième, ou un sixième, ou un quart de tour, et éventuellement de moins d'un demi-cercle.
- L'enceinte et la sonde comprennent des rayons de courbure principaux égaux, ou différents d'au plus : 20%, ou 10%, ou 5%.
- Le rayon de courbure de l'enceinte ; notamment sa courbure principale ; est compris entre 0,30 m et 2,00m, ou entre 0,50m et 1,00m.
- Le rayon de courbure de la sonde est compris entre 0,30 m et 2,00m, ou entre 0,50m et 1,00m.
- La sonde arquée est configurée pour mesurer la capacité électrique du volume d'huile dans l'enceinte principale afin d'en déterminer le volume.
- La sonde comprend deux tubes emmanchés qui sont électriquement conducteurs et isolés électriquement l'un de l'autre, les tubes étant destinés à mesurer la résistance électrique de l'huile afin d'en estimer le volume.
- Le fourreau s'étend sur la majorité ou sensiblement toute la longueur de la sonde.
- Le fourreau comprend des découpes généralement perpendiculaires à l'allongement du fourreau.
- Les segments comprennent des liaisons pivot les reliant les uns aux autres.
- Les découpes se chevauchent selon la circonférence du fourreau.

L'invention a également pour objet une turbomachine, notamment un turboréacteur d'aéronef apte à fonctionner avec une accélération verticale négative, comprenant un ensemble pour réservoir d'huile, remarquable en ce que l'ensemble est conforme à l'invention, éventuellement l'ensemble comprend un module de mesure de la température de l'huile, ledit module étant notamment combiné à la sonde arquée.

Selon un mode avantageux de l'invention, la turbomachine comprend une veine primaire annulaire et une veine secondaire annulaire, le réservoir étant disposé entre lesdites veines annulaires.

Selon un mode avantageux de l'invention, la turbomachine comprend un corps annulaire séparant le flux primaire du flux secondaire, le réservoir étant disposé dans l'épaisseur radiale dudit corps.

Selon un mode avantageux de l'invention, la turbomachine comprend un carter annulaire, le réservoir épousant le carter annulaire sur au moins : 20°, ou 30°, ou 40°.

L'invention a pour objet un procédé de montage d'une sonde de niveau de liquide dans un réservoir de turbomachine, notamment de turboréacteur d'aéronef, le procédé comprenant les étapes suivantes : (a) fourniture ou réalisation d'un réservoir avec une paroi externe formant une enceinte principale généralement courbe ; (b) fourniture ou réalisation d'une sonde de mesure électrique de niveau; remarquable en ce qu'à l'intérieur de l'enceinte principale le réservoir comprend des supports de sonde et/ou un fourreau arqué, le procédé comprenant en outre une étape : (c) introduction de la sonde dans l'enceinte en venant au contact des supports de sonde et/ou du fourreau arqué de manière à épouser la courbure de l'enceinte, à l'issue de l'étape (c) introduction, le réservoir et la sonde forment éventuellement un ensemble selon l'invention.

Selon des modes avantageux de l'invention, le procédé peut comprendre une ou plusieurs des caractéristiques suivantes, prises isolément ou selon toutes les combinaisons techniques possibles :
- A l'étape (b) fourniture ou réalisation d'une sonde, la sonde est droite, lors de l'étape (c) introduction la sonde est déformée de manière à l'arquer.
- Lors de l'étape (c) introduction la sonde est progressivement arquée à mesure qu'elle entre en contact des supports de sonde et/ou du fourreau arqué.
- A l'étape (b) fourniture ou réalisation d'une sonde, la sonde est arquée selon un rayon de courbure, lors de l'étape (c) introduction la sonde conserve son rayon de courbure.
- Le réservoir comprend une ouverture, notamment une ouverture supérieure de remplissage, lors de l'étape (c) introduction la sonde est introduite via ladite ouverture.
- A l'étape (c) introduction, le réservoir est monté sur une turbomachine, notamment une turbomachine selon l'invention.
- A l'étape (c) introduction, les surfaces de centrages dévient la sonde vers l'intérieur des supports.
- La sonde de mesure de niveau est une sonde mesure de niveau d'huile.
- Le réservoir est un réservoir d'huile.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire soit explicitement précisé.

### Avantages apportés

L'invention permet de réaliser un réservoir d'huile de grande contenance dans un espace réduit, tout en préservant l'exactitude de la mesure du niveau. En effet, le réservoir peut être courbé à souhait puisque la sonde peut balayer toute sa hauteur malgré l'obstacle que forme sa paroi localement concave. Grâce aux supports comme au fourreau, la position de la sonde peut être ajustée malgré la présence d'autres équipements. En particulier, l'invention permet de placer une sonde dans le réservoir lorsque la courbure de l'enceinte pourrait bloquer une sonde droite.

Par ailleurs, la sonde peut être éloignée de certains équipements qui influent sur la mesure, ou sur l'homogénéité de l'huile. Un décalage par rapport à une sortie ou une entrée d'huile peut être optimisé, par exemple en raison du caractère abrasif de l'huile. Le fourreau peut être entendu comme un, ou faisant partie du support de sonde.

### Brève description des dessins

La figure 1 représente une turbomachine axiale selon l'invention.
La figure 2 illustre un réservoir selon un premier mode de réalisation de l'invention.
La figure 3 illustre un réservoir selon un deuxième mode de réalisation de l'invention.
La figure 4 esquisse un fourreau selon le deuxième mode de réalisation de l'invention.
La figure 5 esquisse un fourreau selon un troisième mode de réalisation de l'invention.
La figure 6 est un diagramme d'un procédé de montage d'une sonde de niveau dans un réservoir selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à la direction axiale.

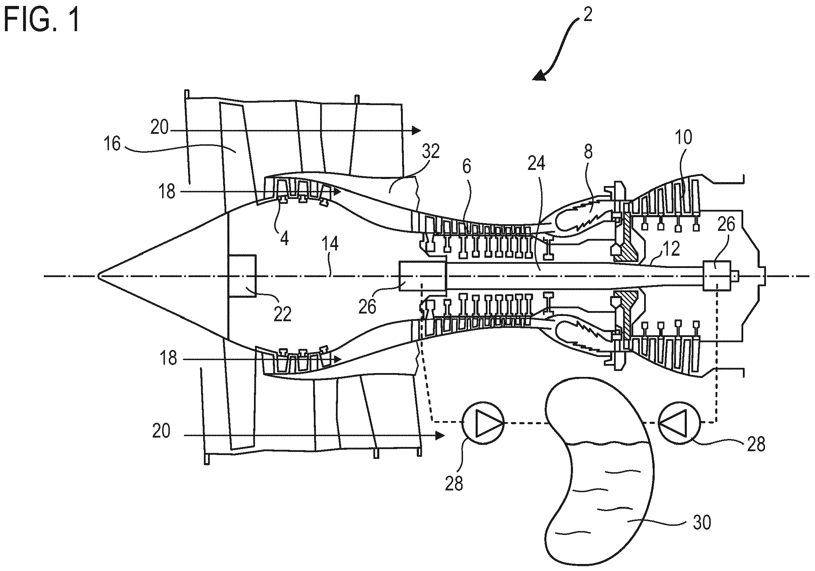

La figure 1 représente de manière simplifiée une turbomachine axiale. Il s'agit dans ce cas précis d'un turboréacteur double-flux adapté au vol d'un avion.

Le turboréacteur 2 comprend un premier niveau de compression, dit compresseur basse pression 4, un deuxième niveau de compression, dit compresseur haute pression 6, une chambre de combustion 8 et un ou plusieurs niveaux de turbines 10. En fonctionnement, la puissance mécanique des turbines 10 transmise au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée dans la chambre de combustion 8. Un ventilateur d'arrivée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire. Des moyens de démultiplication, tel un réducteur épicycloïdal 22, peut réduire la vitesse de rotation de la soufflante 16 et/ou du compresseur basse pression 4 par rapport au niveau de turbine 10 associé. Les arbres de transmission 24 sont articulés par des paliers 26 lubrifiés par un circuit d'huile propre à la turbomachine. Des pompes 28 du circuit dirigent l'huile vers un réservoir 30.

En fonctionnement, l'huile se charge en air et en particules métalliques. Sa température proche de 200°C augmente son caractère corrosif. Aussi le réservoir 30 peut subir des G négatif, ce qui impose que chaque équipement, dont l'évent ; est configuré pour éviter de perdre de l'huile.

L'implantation du réservoir 30 est ici figurative. En réalité il peut être monté sur le carter de soufflante, et plus préférentiellement à l'intérieur du stator 32 séparant le flux primaire 18 du flux secondaire 20, qui sont respectivement canalisées par une veine primaire et une veine secondaire.

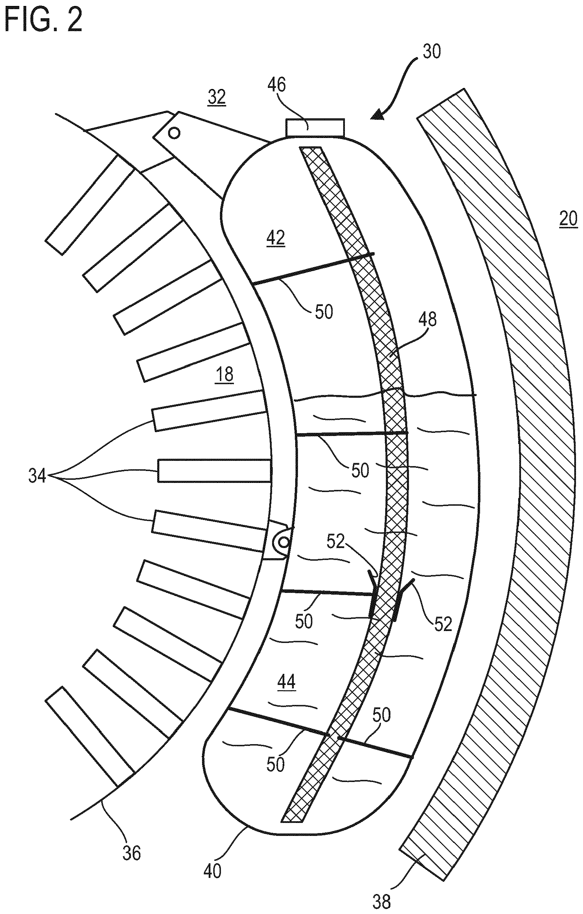

La figure 2 est une vue en coupe d'un réservoir d'huile 30 d'une turbomachine axiale telle que celle de la figure 1. Le stator 32 et des aubes 34 de compresseur y étant fixées sont représentées, tout comme les flux primaire 18 et secondaire 20. Le réservoir 30 peut être logé entre un carter 36 de compresseur, et une cloison 38 guidant le flux secondaire 20. Le rotor n'est pas représenté par soucis de clarté.

Le réservoir 30 est généralement courbe. Son contour général est cambré pour s'imbriquer dans le stator 32 circulaire de la turbomachine. Sa paroi externe 40, ou enveloppe, comprend une surface radialement intérieure incurvée, et par exemple en regard du carter 36 de compresseur. A l'opposé, sa surface, notamment en regard de la cloison 38, est bombée, par exemple selon deux rayons de courbure.

Le réservoir 30 comporte une enceinte interne principale 42 généralement close. Cette dernière peut stocker au moins 60 litres d'huile 44. L'enceinte 42 est également courbe. Elle peut généralement présenter une direction principale, par exemple selon la direction verticale dans le sens normal de montage. L'enceinte 42 peut généralement former un cylindre fléchit, par exemple selon un même rayon de courbure. Le dessus du réservoir 30 peut être identifié via un bouchon 46 associé à une ouverture correspondante.

Afin de mesurer et/ou d'estimer le volume d'huile 44 dans le réservoir, un système de mesure comporte une sonde électrique 48 baignant dans ce liquide, et un ordinateur permettant d'exécuter un programme informatique. La sonde 48 est généralement arquée, par exemple selon un rayon de courbure constant. Elle suit la forme courbe du réservoir, ainsi que la courbure principale de la cavité. La courbure principale est celle ayant le plus grand rayon de courbure. La sonde 48 s'étend sur la majorité ou sur toute la longueur, en l'occurrence la hauteur de l'enceinte 42. Ainsi, elle peut être en contact de l'huile dans sensiblement tout le volume utile de l'enceinte 42.

La sonde 48 peut comprendre une ou plusieurs électrodes électriques venant en contact électrique de l'huile. Elle peut être capacitive et/ou résistive ; elle peut mesurer respectivement la capacité électrique et/ou la résistance électrique de l'huile. Dans cette dernière configuration, elle peut être dotée de deux tubes coaxiaux et emmanchés. Ces tubes mesurent la résistance électrique de l'huile dans l'espace annulaire les séparant.

En complément le réservoir 30 comporte des supports 50, notamment internes, en ce sens qu'ils sont placés à l'intérieur de l'enceinte. Les supports 50 ont pour fonction de maintenir la sonde 48 à l'intérieur de l'enceinte. Les supports 50 peuvent être agencés le long de la sonde 48. Ils peuvent être répartis de manière homogène. Ils peuvent former des bras perpendiculaires à la paroi 40 et/ou à la sonde 48. Certains, par exemple les deux du bas, peuvent être diamétralement opposés par rapport à la sonde 48.

Chaque support 50 peut comprendre une boucle, notamment à une extrémité, dans laquelle la sonde 48 est glissée. Chaque support 50 peut comprendre une surface de maintien de la sonde 48. La réunion des surfaces de maintien peut décrire ou suivre la courbure de l'enceinte 42. Au moins un ou plusieurs ou chaque support 50 peut comprendre un guide 52. Un tel guide 52 peut être conique, par exemple en entonnoir, et s'agrandir vers le bouchon 46, soit vers le haut. Chaque guide 52 peut comprendre une surface de centrage ramenant la sonde vers le centre du passage du support lors de son introduction. Ces surfaces de guidage évitent un mauvais montage de la sonde malgré la contrainte du montage en aveugle. Elles présentent ainsi un caractère « anti-erreur de montage ».

Le réservoir 30 peut comprendre des éléments de fixation (non représentés) de la sonde 48. Ces éléments peuvent être associés à la paroi 40 et/ou aux supports 50. Ils permettent d'y immobiliser la sonde 48 malgré les mouvements de l'huile 44 et les vibrations.

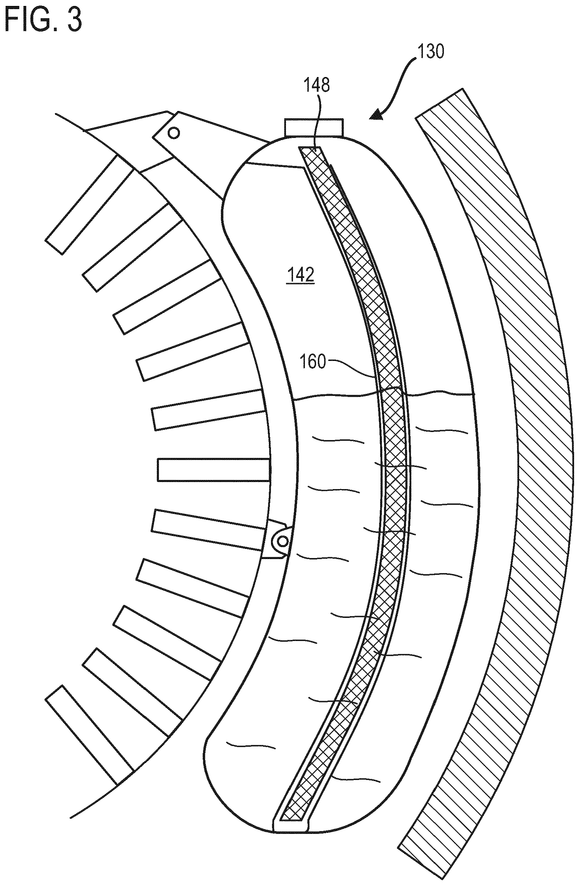

La figure 3 esquisse le réservoir 130 selon un deuxième mode de réalisation de l'invention. Cette figure 3 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le réservoir 130 comporte un fourreau 160 arqué. Ce dernier est placé dans l'enceinte 142. Il peut s'étendre en continu sur la majorité ou sur sensiblement toute la longueur, par exemple la hauteur, de l'enceinte 142 et/ou de la sonde 148. Le fourreau 130 peut être ajouré pour faciliter l'entrée et la sortie de l'huile, afin de venir au contact de la sonde 148.

La cavité du fourreau 160 reçoit la sonde 148. Elles peuvent être ajustées l'une à l'autre pour bloquer la sonde. Les éléments de fixations peuvent compléter ce blocage. Le fourreau 160 peut être fixée à au moins une ou à chacune de ses extrémités opposées. Ces extrémités, par exemple inférieure et supérieure, peuvent correspondre à celles de l'enceinte 142.

Eventuellement, le fourreau est scindé en deux parties, par exemple une supérieure et une inférieure.

Eventuellement, le fourreau peut être maintenu par des supports tels que ceux du premier mode de réalisation de l'invention. Dès lors la sonde serait maintenue indirectement par les supports puisqu'elle est d'abord en contact du fourreau.

Le maintien de la sonde peut être mixte, c'est-à-dire à la fois via les supports du premier mode de réalisation de l'invention, et via un ou plusieurs fourreaux du deuxième mode. Par exemple la moitié supérieure de la sonde est maintenue par un ou plusieurs supports, et la moitié inférieure est maintenue par un fourreau ; ou inversement.

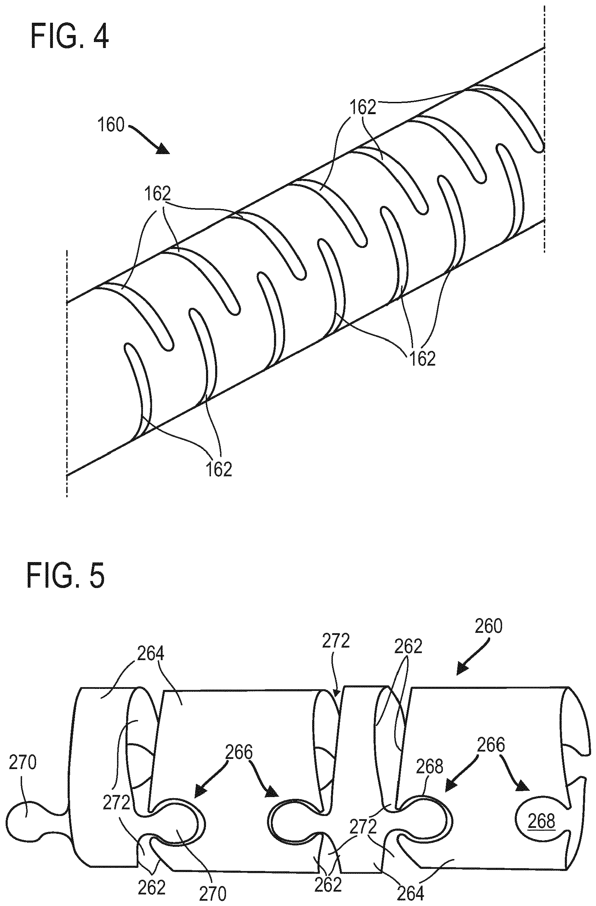

La figure 4 représente un fourreau 160 tel que celui de la figure 3 ; toutefois le fourreau 160 est représenté dans une configuration droite et non arquée.

Le fourreau 160 est généralement tubulaire. Il peut être assoupli à l'aide de découpes 162 qui en outre améliorent la circulation de l'huile au travers de sa peau. Les découpes 162 sont réparties, éventuellement homogènement, sur la longueur du fourreau 160. Les découpes 162 peuvent être agencées perpendiculaires à l'axe du fourreau 160, donc à l'allongement principal du fourreau. Toutefois elles pourraient être inclinées par rapport à l'axe. Les découpes 162 peuvent se chevancher selon la circonférence afin d'augmenter la souplesse.

Le fourreau 160 ici représenté peut être issu d'un tube extrudé. Il pourrait également être produit à partir d'un autre type de tube, ou encore d'un profilé carré. Après la réalisation des découpes 162, notamment par laser, il peut être cintré pour prendre la courbure présentée en figure 3.

La figure 5 représente un fourreau 260 selon le troisième mode réalisation de l'invention. Cette figure 5 reprend la numérotation des figures précédentes pour les éléments identiques ou similaires, la numération étant toutefois incrémentée de 200. Des numéros spécifiques sont utilisés pour les éléments spécifiques à ce mode de réalisation.

Les découpes 262 divisent le fourreau 260 en plusieurs segments 264 mobiles. Chaque découpe 262 décrit une boucle fermée autour du fourreau 260. Les segments 264 sont articulés et mobiles les uns par rapport aux autres. Ils peuvent comprendre des liaisons pivot 266 leur permettent d'être attachés les uns aux autres, et ainsi de former une chaîne. Les pivots 266 peuvent être formés via des encoches 268 recevant des têtes 270. Leurs contours arrondis favorisent le mouvement de pivotement. Les étranglements des encoches 268 couplés aux resserrements des têtes 270 permettent une rétention selon l'axe du fourreau 260. Les têtes 270 comme les encoches 268 ; et donc les pivots ; peuvent être formés grâce aux découpes 262 ; avantageusement réalisées au laser.

Le fourreau 260 est ici représenté en configuration droite. Les découpes forment des fentes 272 qui s'élargissent en s'éloignant des liaisons pivot 266. Par ce biais, le mouvement de pivotement peut être bloqué, et le rayon de courbure que prend le fourreau 260 peut être limité. Ceci permet de garder la forme arquée de fourreau présentée en figure 3.

Les deux types de fourreaux présentés ci-dessus peuvent être combinés. Une zone de sonde peut être maintenue par le fourreau du deuxième mode, une autre zone peut être maintenue par le fourreau du troisième mode.

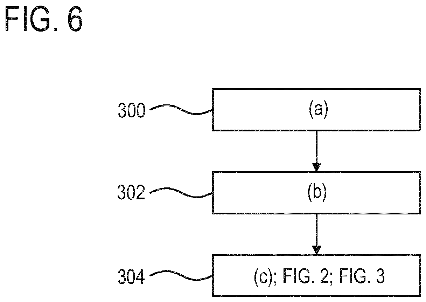

La figure 6 est un diagramme d'un procédé d'assemblage de réservoir selon l'invention, qui est également un procédé de montage d'une sonde de niveau dans un réservoir de turbomachine. Le procédé permet de réaliser un réservoir tel que présenté en figures 1 à 3 et selon les variantes, et par exemple avec un fourreau des figures 4 ou 5.

Le procédé peut comprendre les étapes suivantes, éventuellement réalisées dans l'ordre qui suit :
(a) fourniture ou réalisation 300 d'un réservoir avec une paroi externe formant une enceinte principale généralement courbe, et renfermant des supports de sonde et/ou un ou plusieurs fourreaux ;
(b) fourniture ou réalisation 302 d'une sonde de mesure électrique du niveau;
(c) introduction 304 de la sonde dans l'enceinte en venant au contact des supports de sonde et/ou du fourreau arqué de manière à épouser la courbure de l'enceinte.

A l'étape (b) fourniture ou réalisation 302 d'une sonde, la sonde est droite, lors de l'étape (c) introduction 304 la sonde est déformée de manière à l'arquer comme l'enceinte

Lors de l'étape (c) introduction 304 la sonde est progressivement arquée à mesure qu'elle entre en contact des supports de sonde et/ou du fourreau arqué. Son rayon de courbure principal diminue. A l'issue de l'étape (c) introduction 304, le réservoir et la sonde forment une combinaison selon l'une des figures 2 et 3.

En variante, à l'étape (b) fourniture ou réalisation 302 d'une sonde, cette dernière est essentiellement rigide et arquée selon un rayon de courbure qui reste identique et/ou constant jusqu'à la fin de de l'étape (c) introduction 304.

## Revendications

1. Ensemble pour réservoir (30 ; 130) d'huile (44) de turbomachine (2), notamment de turboréacteur d'aéronef, l'ensemble incluant un réservoir (30 ; 130) d'huile (44) avec une paroi externe (40) formant une enceinte principale (42) généralement courbe,
**caractérisé en ce que** l'enceinte principale (42 ; 142) contient
une sonde arquée (48 ; 148) de mesure électrique du niveau d'huile (44), ladite sonde arquée (48 ; 148) épousant la courbure de l'enceinte principale (42 ; 142), et
des supports (50) de sonde internes disposés le long de la sonde arquée (48 ; 148), et/ou un fourreau arqué (160 ; 260) avec une cavité arquée dans laquelle est disposée la sonde arquée (48 ; 148).

2. Ensemble selon la revendication 1, **caractérisé en ce que** les supports (50) de sonde s'étendent depuis la paroi externe (40) vers l'intérieur de l'enceinte principale (42).

3. Ensemble selon l'une des revendications 1 ou 2, **caractérisé en ce que** l'enceinte principale (42 ; 142) présente un allongement principal et une courbure principale le long dudit allongement principal.

4. Ensemble selon l'une des revendications 1 à 3, **caractérisé en ce qu'**au moins un ou plusieurs ou chaque support comprend un bras s'étendant de la sonde arquée (48) à la paroi externe (40), éventuellement perpendiculairement.

5. Ensemble selon l'une des revendications 1 à 4, **caractérisé en ce que** les supports (50) de sonde comprennent des guides (52) entourant la sonde arquée (48), les guides (52) comprenant éventuellement des surfaces de centrage.

6. Ensemble selon l'une des revendications 1 à 5, **caractérisé en ce que** les supports (50) de sonde sont répartis le long de la sonde arquée (48) et/ou le long de la courbure de l'enceinte principale (42).

7. Ensemble selon l'une des revendications 1 à 6, **caractérisé en ce que** le fourreau (260) est articulé, notamment à l'aide de liaisons pivot (266).

8. Ensemble selon l'une des revendications 1 à 7, **caractérisé en ce que** le fourreau (160; 260) comprend des découpes (162; 262) qui préférentiellement divisent le fourreau (260) en plusieurs segments (264) mobiles les uns par rapport aux autres.

9. Ensemble selon l'une des revendications 1 à 8, **caractérisé en ce que** le fourreau (160 ; 260) est relié à la paroi externe (40) via les supports (50) ou directement.

10. Ensemble selon l'une des revendications 1 à 9, **caractérisé en ce que** la sonde arquée (48 ; 148) comprend un conducteur électrique configuré pour être alimenté électriquement afin de mesurer le niveau d'huile (44), notamment en étant en contact électrique de l'huile.

11. Turbomachine (2), notamment un turboréacteur d'aéronef apte à fonctionner avec une accélération verticale négative, comprenant un ensemble pour réservoir (30 ; 130) d'huile (44), **caractérisée en ce que** l'ensemble est conforme à l'une des revendications 1 à 10, éventuellement l'ensemble comprend un module de mesure de la température de l'huile, ledit module étant notamment combiné à la sonde arquée (48 ; 148).

12. Procédé de montage d'une sonde (48 ; 148) de niveau de liquide dans un réservoir (30 ; 130) de turbomachine (2), notamment de turboréacteur d'aéronef, le procédé comprenant les étapes suivantes :
(a) fourniture ou réalisation (300) d'un réservoir avec une paroi externe (40) formant une enceinte principale (42 ; 142) généralement courbe ;
(b) fourniture ou réalisation (302) d'une sonde (48 ; 148) de mesure électrique de niveau;
**caractérisé en ce qu'**à l'intérieur de l'enceinte principale (42 ; 142) le réservoir (30 ; 130) comprend des supports (50) de sonde et/ou un fourreau arqué (160 ; 260),
le procédé comprenant en outre une étape :
(c) introduction (304) de la sonde (48 ; 148) dans l'enceinte en venant au contact des supports (50) de sonde et/ou du fourreau arqué (160 ; 260) de manière à épouser la courbure de l'enceinte,
à l'issue de l'étape (c) introduction, le réservoir (30 ; 130) et la sonde (48 ; 148) forment éventuellement un ensemble selon l'une des revendications 1 à 10.

13. Procédé selon la revendication 12, **caractérisé en ce qu'**à l'étape (b) fourniture ou réalisation (302) d'une sonde, la sonde (48 ; 148) est droite, et lors de l'étape (c) introduction la sonde est déformée de manière à l'arquer, préférentiellement la sonde (48 ; 148) est progressivement arquée à mesure qu'elle entre en contact des supports (50) de sonde et/ou du fourreau arqué (160 ; 260).

14. Procédé selon la revendication 12, **caractérisé en ce qu'**à l'étape (b) fourniture ou réalisation (302) d'une sonde (48 ; 148), la sonde est arquée selon un rayon de courbure, lors de l'étape (c) introduction (304) la sonde conserve son rayon de courbure.

15. Procédé selon l'une des revendications 12 à 14, **caractérisé en ce que** le réservoir (30 ; 130) comprend une ouverture, notamment une ouverture supérieure de remplissage, lors de l'étape (c) introduction (304) la sonde arquée (48 ; 148) est introduite via ladite ouverture.

## Patentansprüche

1. Baugruppe für einen Tank (30; 130) des Öls (44) einer Turbomaschine (2), insbesondere eines Turbostrahltriebwerks eines Luftfahrzeugs, wobei die Baugruppe einen Tank (30; 130) des Öls (44) mit einer externen Wand (40) umfasst, die eine allgemein gekrümmte Haupthülle (42) ausbildet,
**gekennzeichnet dadurch, dass** die Haupthülle (42; 142) enthält
einen gekrümmten Sensor (48; 148) zum elektrischen Messen des Ölstandes (44), wobei der besagte gekrümmte Sensor (48; 148) der Krümmung der Haupthülle (42; 142) angepasst ist, und
interne Unterstützungen (50) des Sensors, die entlang des gekrümmten Sensors (48; 148) vorgesehen sind und/oder eine gekrümmte Hülse (160; 260) mit einem gekrümmten Hohlraum, in dem der gekrümmte Sensor (48; 148) angeordnet ist.

2. Die Baugruppe gemäß Anspruch 1, **gekennzeichnet dadurch, dass** die Unterstützungen (50) des Sensors sich von der externen Wand (40) zum Inneren der Haupthülle (42) hin erstrecken.

3. Die Baugruppe gemäß einem der Ansprüche 1 oder 2, **gekennzeichnet dadurch, dass** die Haupthülle (42; 142) eine Hauptausdehnung und eine Hauptkrümmung entlang der besagten Hauptausdehnung hat.

4. Die Baugruppe gemäß einem der Ansprüche 1 bis 3, **gekennzeichnet dadurch, dass** zumindest eine oder mehrere oder jede der Unterstützungen einen Arm umfassen, der sich von dem gekrümmten Sensor (48) zu der externen Wand (40) hin erstreckt, möglicherweise senkrecht.

5. Die Baugruppe gemäß einem der Ansprüche 1 bis 4, **gekennzeichnet dadurch, dass** die Unterstützungen (50) des Sensors Führungen (52) umfassen, die den gekrümmten Sensor (48) umgeben, wobei die Führungen (52) möglicherweise Zentrierungsflächen aufweisen.

6. Die Baugruppe gemäß einem der Ansprüche 1 bis 5, **gekennzeichnet dadurch, dass** die Unterstützungen (50) des Sensors entlang des gekrümmten Sensors (48) verteilt sind und/oder entlang der Krümmung der Haupthülle (42).

7. Die Baugruppe gemäß einem der Ansprüche 1 bis 6, **gekennzeichnet dadurch, dass** die Hülse (260) beweglich ist, insbesondere mittels Drehverbindungen (266).

8. Die Baugruppe gemäß einem der Ansprüche 1 bis 7, **gekennzeichnet dadurch, dass** die Hülse (160; 260) Ausschnitte (162; 262) aufweist, die vorzugsweise die Hülse (260) in mehrere Segmente (264) teilen, die bezogen aufeinander beweglich sind.

9. Die Baugruppe gemäß einem der Ansprüche 1 bis 8, **gekennzeichnet dadurch, dass** die Hülse (160; 260) mit der externen Wand (40) über die Unterstützungen (50) oder direkt verbunden ist.

10. Die Baugruppe gemäß einem der Ansprüche 1 bis 9, **gekennzeichnet dadurch, dass** der gekrümmte Sensor (48; 148) einen elektrischen Leiter umfasst, der dazu konfiguriert ist, elektrisch versorgt zu werden, um den Ölstand (44) zu messen, insbesondere indem er mit dem Öl in elektrischem Kontakt ist.

11. Turbomaschine (2), insbesondere Turbostrahltriebwerks eines Luftfahrzeugs, das dazu angepasst ist, mit einer negativen vertikalen Beschleunigung betrieben zu werden, umfassend eine Baugruppe (30; 130) eines Tank (30; 130) von Öl (44), **gekennzeichnet dadurch, dass** die Baugruppe gemäß einem der Ansprüche 1 bis 10 ist, wobei die Baugruppe möglicherweise ein Modul zum Messen der Temperatur des Öls umfasst, wobei das besagte Modul insbesondere mit dem gekrümmten Sensor (48; 148) kombiniert ist.

12. Verfahren zum Montieren eines Flüssigkeitsstandsensors (48; 148) in einem Tank (30; 130) einer Turbomaschine (2), insbesondere einem Turbostrahltriebwerk eines Luftfahrzeugs, wobei das Verfahren die folgenden Schritte umfasst:
(a) Bereitstellen oder Herstellen (300) eines Tanks mit einer externen Wand (40), die eine allgemein gekrümmte Haupthülle (42; 142) ausbildet,
(b) Bereitstellen oder Herstellen (302) eines Sensors (48; 148) zum elektrischen Messen eines Füllstandes;
**gekennzeichnet dadurch, dass** der Tank (30; 130) im Inneren der Haupthülle (42; 142) Unterstützungen (50) und/oder eine gekrümmte Hülse (160; 260) umfasst,
wobei das Verfahren weiter einen Schritt umfasst:
(c) Einführen (304) des Sensors (48; 148) in die Hülle, wobei er dabei mit den Unterstützungen (50) des Sensors und/oder mit der gekrümmten Hülse (160; 260) in Kontakt kommt, derart, dass er der Krümmung der Haupthülle angepasst ist,
und wobei am Ende des Einführungsschrittes (c) der Tank (30; 130) und der Sensor (48; 148) möglicherweise eine Baugruppe gemäß einem der Ansprüche 1 bis 10 ausbilden.

13. Das Verfahren gemäß Anspruch 12, **gekennzeichnet dadurch, dass** in dem Schritt (b) des Bereitstellens oder Herstellens (302) eines Sensors (48; 148), der Sensor (48; 148) gerade ist und dass während des Einführungsschrittes (c) der Sensor deformiert wird, um ihn zu krümmen, wobei der Sensor (48; 148) vorzugsweise schrittweise gekrümmt wird, sobald er in Kontakt mit den Unterstützungen (50) des Sensors und/oder der gekrümmten Hülse (160; 260) kommt .

14. Das Verfahren gemäß Anspruch 12, **gekennzeichnet dadurch, dass** in dem Schritt (b) des Bereitstellens oder Herstellens (302) eines Sensors (48; 148), der Sensor (48; 148) entlang eines Krümmungsradius gekrümmt ist, und dass der Sensor seinen Krümmungsradius bei dem Schritt (c) des Einführens (304) beibehält.

15. Das Verfahren gemäß einem der Ansprüche 12 bis 14, **gekennzeichnet dadurch, dass** der Tank (30; 130) eine Öffnung umfasst, insbesondere einem obere Einfüllöffnung, und dass der gekrümmte Sensor (48; 148) bei dem Schritt (c) des Einführens (304) über die besagte Öffnung eingeführt wird.

## Claims

1. Assembly for an oil (44) tank (30; 130) of a turbine engine (2), particularly of an aircraft turbojet, the assembly including an oil (44) tank (30; 130) with an external wall (40) forming a generally curved principal enclosure (42),
**characterized in that** the principal enclosure (42; 142) contains
an arched sensor (48; 148) for electrically measuring the oil (44) level, said arched sensor (48; 148) matching the curvature of the principal enclosure (42; 142), and sensor internal supporting means (50) disposed along the arched sensor (48; 148), and/or an arched socket (160; 260) with an arched cavity in which the arched sensor (48; 148) is disposed.

2. Assembly according to claim 1, **characterized in that** the sensor supporting means (50) extend from the external wall (40) toward the inside of the principal enclosure (42).

3. Assembly according to one of claims 1 or 2, **characterized in that** the principal enclosure (42; 142) has a principal elongation and a principal curvature along said principal elongation.

4. Assembly according to one of claims 1 to 3, **characterized in that** at least one or more or each supporting means comprises an arm extending from the arched sensor (48) to the external wall (40), possibly perpendicularly.

5. Assembly according to one of claims 1 to 4, **characterized in that** the sensor supporting means (50) comprise guides (52) surrounding the arched sensor (48), the guides (52) possibly comprising centring surfaces.

6. Assembly according to one of claims 1 to 5, **characterized in that** the sensor supporting means (50) are distributed along the arched sensor (48) and/or along the curvature of the principal enclosure (42).

7. Assembly according to one of claims 1 to 6, **characterized in that** the socket (260) is hinged, particularly using pivot connections (266).

8. Assembly according to one of claims 1 to 7, **characterized in that** the socket (160; 260) comprises cut-outs (162; 262) which preferably divide the socket (260) into several segments (264) that are mobile with respect to one another.

9. Assembly according to one of claims 1 to 8, **characterized in that** the socket (160; 260) is connected to the external wall (40) via the supporting means (50) or is directly connected to the external wall (40).

10. Assembly according to one of claims 1 to 9, **characterized in that** the arched sensor (48; 148) comprises an electrical conductor configured to be electrically powered such as to measure the oil (44) level, particularly by being in electrical contact with the oil.

11. Turbine engine (2), particularly an aircraft turbojet that can operate with a negative vertical acceleration, comprising an oil (44) tank (30; 130) assembly, **characterized in that** the assembly is in accordance with one of claims 1 to 10, and possibly the assembly comprises a module for measuring the temperature of the oil, said module being in particular combined with the arched sensor (48; 148).

12. Method for mounting a liquid level sensor (48; 148) in a tank (30; 130) of a turbine engine (2), particularly of an aircraft turbojet, the method comprising the following steps:
(a) providing or producing (300) a tank with an external wall (40) forming a generally curved principal enclosure (42; 142);
(b) providing or producing (302) a level electrical measuring sensor (48; 148);
**characterized in that**, inside the principal enclosure (42; 142), the tank (30; 130) comprises sensor supporting means (50) and/or an arched socket (160; 260),
the method further comprising a step:
(c) inserting (304) the sensor (48; 148) into the enclosure while coming into contact with the sensor supporting means (50) and/or with the arched socket (160; 260) such as to match the curvature of the enclosure,
and at the end of the insertion step (c), the tank (30; 130) and the sensor (48; 148) possibly form an assembly according to one of claims 1 to 10.

13. Method according to claim 12, **characterized in that**, in the step (b) for providing or producing (302) a sensor, the sensor (48; 148) is straight, and during the insertion step (c), the sensor is deformed so as to arch it, preferably during the insertion step (c), the sensor (48; 148) is gradually arched as it enters into contact with the sensor supporting means (50) and/or with the arched socket (160; 260).

14. Method according to claim 12, **characterized in that**, in the step (b) for providing or producing (302) a sensor (48; 148), the sensor is arched along a radius of curvature, and during the insertion (304) step (c), the sensor retains the radius of curvature thereof.

15. Method according to one of claims 12 to 14, **characterized in that** the tank (30; 130) comprises an opening, particularly a filling upper opening, and during the insertion (304) step (c), the arched sensor (48; 148) is inserted via said opening.
